# EUROPEAN PATENT APPLICATION

(11) **EP 4 184 017 A1**
(43) Date of publication of application: **24.05.2023**
(21) Application number: 21209602.8
(22) Date of filing: 22.11.2021
(51) Int. Cl.: F16B 5/06, F16B 2/12, F16B 21/09, F24S 25/61, H01Q 1/12, E04D 1/34

(54) **A ROOF ATTACHMENT CONSOLE**

(71) Applicant: Mats Lundqvist AB, 56162 Tenhult (SE)
(72) Inventor: Lundqvist, Mats, 56162 Tenhult (SE)
(74) Representative: AWA Sweden AB

(57) **Abstract**

The disclosure relates to an attachment console (1) for the attachment of a mounting rail (4), which may be used to mount a device, e.g. solar panel onto a roof. The roof attachment console (1) may provide a more stable and safe arrangement for the mounting of solar panels and other devices onto roof. The roof attachment console (1) comprises a rail receiving plate (3) onto which the mounting rail (4) may be fixed by a fixation member (5). In one embodiment the mounting rail (4) may be fixed to the rail receiving plate (3) by force from the fixation member (5) being attached to the rail receiving plate (3) at two points. The rail receiving member (3) has at least one track (6a, 6b) onto which the fixation member (5) may be attached through screwing or bolting at one point. The fixation member (5) may comprise at least one pair of recesses, which may be fixed attached onto the at least one track (6a, 6b) of the rail receiving plate (3).

## Description

### Field of invention

The present invention relates to a roof attachment console, and especially a roof attachment console for receiving a mounting rail configured for e.g. solar panel installations.

### Technical Background

With an increased use of solar panels, due to sustainability and economic reasons, there is an increased need for stable solutions of mounting solar panels onto roofs. Moreover, other devices which are to be mounted on roofs, such as lightning rods and antennas need stable mounting arrangements. The stability of such solutions is a challenge, in particular on roof tiles, where the panels are not fixed by any other means than the weight of overlapping portions of adjacent panels. Today solar panels are often mounted using brackets attached to the roof below roof tiles and extending out between roof tiles, which provides a great risk of damage to the existing roof tiles, and thereby a risk of leakage and damage to the roof. Other existing solutions involve mounting onto conventional tile panels, but which may comprise complicated attachment configurations for the solar panel, making the procedure of mounting a solar panel or other equipment onto the roof difficult and risky. Moreover, there are solutions in which the roof waterproofing needs to be punctured, entailing higher risk for leakage. Furthermore, roofs are exposed to local weather conditions such as rain and wind which may bring small tree branches and leaves to the roof, resulting in a load on the construction and decreased friction between adjacent panels and linked objects used to mount devices on the roof. The mounting of solar panels may also be a demanding work possibly associated with a risk of working at high elevation at present weather conditions.

There is therefore a need of a safer, more efficient and stable solution for the arrangement of how the solar panels and other equipment are mounted and maintained onto roofs.

### Summary of invention

It is an object of the invention to provide a roof attachment console which enhances the safety and convenience of the mounting of solar panels and other devices, such as antennas or lightning rods, onto a roof and further to provide a stable arrangement.

According to one aspect of the invention there is provided a roof attachment console intended to be mounted onto a roof, allowing a mounting rail to be attached onto said attachment console. The attachment console comprises a bottom plate intended to be mounted onto a roof, a rail receiving plate, configured to receive a mounting rail, said rail receiving plate having a track and being attached to the bottom plate and a fixation member configured to engage with said track to be attached to the rail receiving plate to fix a mounting rail to the rail receiving plate.

The apparatus of the innovation may provide a safer and more stable solution than existing products. The mounting rail may be used for attaching a solar cell, a safety arrangement, a snow breed protection or another roof mounted arrangement. The fixation member may allow the mounting rail to be fixed to the rail receiving plate without being significantly moved by forces it may be exposed to, such as from the installer of the solar panels or other maintenance taking place on the roof. By having a track on the rail receiving plate, with which the fixation member is configured to engage, a fast and easy fixation of the mounting rail to the rail receiving plate may be provided. Compared to a conventional screw based attachment of a mounting rail to a roof bracket, a user may need less effort in fixing the mounting rail to the rail receiving plate. The mounting rail may be arranged to rest on the rail receiving plate, and the fixation member may engage with the track to be fastened to the rail receiving plate and thereby fixing the mounting rail to the rail receiving plate.

The roof attachment console may be configured to be arranged in combination with adjacent roof tiles or roof panels of the roof. The bottom plate may have a shape and size adapted to engage with adjacent roof tiles or roof panels of a particular roof. The roof tiles or roof panels may preferably be made of tile/brick, concrete, metal, ceramics or the like. The bottom plate of the roof attachment console may be made of metal, preferably steel, or other material, such as wood or plastics. The same material selection may be made for other components of the roof attachment console.

In one embodiment, the roof attachment console may further comprise a support member arranged on the bottom plate and configured to support the rail receiving plate. The support member may be adapted in shape and size to the shape and size of the rail receiving plate. In one embodiment, the rail receiving plate may be integrally formed with a support member, providing the rail receiving plate comprising a support portion providing support on the bottom plate.

In one embodiment of the invention, the fixation member may be configured to engage with the rail receiving plate by at least one fastening means. Preferably, at least one of the fastening means is a screw or a bolt, which may entail a stable attachment of the fixation member to the rail receiving plate at, at least one point. In one embodiment, the fixation member may be configured to engage with the rail receiving plate by means of a fastening means at a location different from the engagement with the track of the rail receiving plate.

In a further embodiment, the fixation member may be configured for different engagement with the at least one track of the rail receiving plate depending on the size of the mounting rail. Different engagement may be fixation at different points along the track. Mounting rails of different sizes may thereby be attached to the rail receiving plate.

In one embodiment, the fixation member may comprise at least one pair of recesses configured to engage with the at least one track of the rail receiving plate. The pair of recesses may be oriented in such way that the fixation member is allowed to move along the track but not detach from the track when the recesses are in engagement with the track. The at least one pair of recesses may be configured such that the fixation member, in a first orientation, may be moved into or out of the track, and upon rotation of the fixation member when moved into the track the at least one pair of recesses may come into engagement with the track. Said rotation may be around a longitudinal axis of the fixation member. A similar rotation may be made in order to change the engagement of the fixation member with the track from a first pair of recesses to a second pair of recesses. Alternatively, the track may be formed in a way such that rotation of the fixation member may not be necessary. For instance, an end portion of the track may have width enabling the fixation member to be inserted, and then moved into a part of the track with the at least one pair of recesses comes into engagement with the track.

The attachment console may further be configured to fix the mounting rail to the rail receiving plate through force resulting from the fixation member being attached to the rail receiving plate. The mounting rail may be clamped between the fixing member and the rail receiving plate. This arrangement may provide a stable attachment of the mounting rail onto the rail receiving plate.

The fixation member may comprise at least two pair of recesses, wherein which pair of recesses to engage with the at least one track of the rail receiving plate depend on the size of the mounting rail to be fixed to the rail receiving plate. When mounting the mounting rail, outer pairs of recesses are led through the track opening, by orienting them in required manner until the pair of recesses which are to engage with the rail receiving plate are through. Followingly, the pair of recesses which are to engage with the rail receiving plate are oriented to not detach from the track. This arrangement may especially enhance the possibility to attach mounting rails of different heights and/or widths to the rail receiving plate.

In one embodiment, the rail receiving plate may have a first portion extending in a first plane, a second portion extending in a second plane in parallel with and offset said first plane, and the first and second portions may be connected via a third portion. In one embodiment the third portion may extend in a third plane substantially perpendicular to said first and second planes. The geometry of the three portions may enable the mounting rail to rest against two surfaces of the rail receiving plate, enhancing the stability of the arrangement, and enabling fixation of the mounting rail using the fixation member. The at least one track may be arranged on the first portion and/or the second portion. The third portion may be adapted in shape and size to the mounting rail intended to be received. For a mounting rail with a rectangular cross-section, the third portion may extend substantially perpendicular to the first and second planes. For a mounting rail with a circular or elliptical cross-section, the third portion may have a rounded, curved or bent form connecting the first and second portions. Similarly, the fixation member may have a shape adapted to the shape of the mounting rail intended to receive, such as rectangular shaped or circular/elliptical.

In one embodiment, the at least one track may comprise a first track arranged on said first portion and a second track on said second portion. The fixation member may be fixed at points at the first or second portion of the rail receiving plate, which may be possible even if the third portion lacks a track. The third portion may also comprise a track. In one embodiment, the tracks on the first and second portions may be portions of the same track extending across the first, second and third portions of the rail receiving plate.

In one embodiment, the fixation member may engage with the first track on the first portion by a fastening means and one of the at least one pair of recesses engages with the second track on the second portion. By letting at least one pair of recesses engage with the second track there may not be a need for screws or bolts at two points of the rail receiving plate, enhancing the convenience of mounting of the mounting rail. Further, the number of components of the arrangement may be reduced. The fastening means may be a screw, a bolt, a snap fastening or the like. Thereby the risk of losing e.g. a screw or o bolt may be reduced and the amount of material needed is decreased.

In one embodiment, the second track on the second portion may have an end portion being wider than the rest of the track. Such wider end portion may be configured to be at least as wide as protrusions of the fixation member forming the at least one pair of recesses. The fixation member may thereby be moved into the end portion without the at least one pair of recesses engaging with the second track, and then moved into the second track such that the at least one pair of recesses engages with the second track.

In one embodiment, the roof attachment console may be configured to fix the mounting rail to the rail receiving plate through a force resulting from the fixation member engaging with the first track by fastening means and one of the at least one pair of recesses engaging with the second track. One of the pair of recesses may be oriented to engage with the second track and thereafter tension is applied by pulling the end of the fixation member which is to engage with the first track. When appropriate tension is applied to fix the mounting rail to the rail receiving plate in a stable manner the fixation member may engage with the first track by said fastening means, which may be screwing or bolting or snapping or the like. The tension may thereby be retained, resulting in the force which fixes the mounting rail onto the rail receiving plate.

In one embodiment, the roof attachment console may be configured to replace a regular roof tile or roof panel of a roof. This may entail the attachment console to be attached to the roof truss and there may be no need for involvement of other roof tiles than the one the attachment console is to replace and adjacent ones.

In one embodiment, the roof attachment console may comprise an adjustable upper portion configured in shape and size to fit together with an adjacent upper roof tile or roof panel of the roof, and/or an adjustable lower portion configured to fit together with an adjacent lower roof tile or roof panel of the roof. This may enhance the possibility for the attachment console to fit into a pattern of conventional tiles or panels of the roof. Said adjacent roof panel may in one embodiment be formed of sheet metal roof panels. The bottom plate may comprise, for the adjustable upper portion an upper flange comprising at least one or at least two elongated openings for enabling vertical adjustment of the adjustable upper portion. Similarly, the bottom plate may comprise a lower flange comprising at least one or at least two elongated openings for enabling vertical adjustment of the adjustable lower portion. The flanges may extend substantially perpendicular to the bottom plate.

The bottom plate may have rabbets along its elongation configured to fit together with horizontally adjacent roof tiles or roof panels. This may further enhance the possibility for the attachment console to fit into a pattern of conventual tile panels.

In one embodiment, the attachment console may have at least one support for a lath at a bottom side of the bottom plate. Said support may be configured to be attached to the roof above the roof waterproofing by at least one fastening means. The support may further be fixed to the roof truss, thereby fixing the roof attachment console directly to the roof truss. This may enable the attachment console to attach to the roof in a stable manner. The attachment to the roof truss may be made by screws extending through the bottom plate, and optionally through the support, into the lath and further into the roof truss.

In one embodiment, the attachment console may comprise a connection means for a lifeline. This may enhance the safety of maintenance on the roof, and of the attachment console as long as the bottom plate is safely attached to the roof. The connection means may be especially useful in the common case of the roof lacking other connection means for a lifeline. The connection means for a lifeline may be a connection opening that may be arranged on the rail receiving plate or another part arranged to the bottom plate. In one embodiment such connection opening may be arranged in combination with the at least one track on the rail receiving plate. The connection opening may be formed as an end portion of said track, which end portion may be wider than the rest of the track.

In one embodiment, the rail receiving plate may be provided with an additional fastening element for attachment of additional equipment related to the roof related devices. Such fastening element may be a threaded hole.

By the elongation of the mounting rail it may be meant the direction, when the mounting rail is mounted, parallel to the purlins of the roof.

By height of the mounting rail it may be meant the height in a plane perpendicular to a plane through the roof surface.

By width it may be meant the extension perpendicular to the height and the elongation of the mounting rail.

### Brief description of the drawings

The inventive concept, non-limiting embodiments and further advantages are further described in more detail with reference to the drawings in which:
Fig. 1 shows a perspective view of a roof attachment console according to an embodiment where a bottom plate and a rail receiving plate are shown;
Fig. 2 shows a perspective view of a roof attachment console according to an embodiment;
Fig. 3 shows a perspective view of a roof attachment console according to an embodiment;
Fig. 4 shows a perspective view of a roof attachment console according to an embodiment;
Fig. 5 shows a side view of a roof attachment console according to an embodiment; and
Fig. 6 shows a front view of a roof attachment console according to an embodiment.

### Detailed description of preferred embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

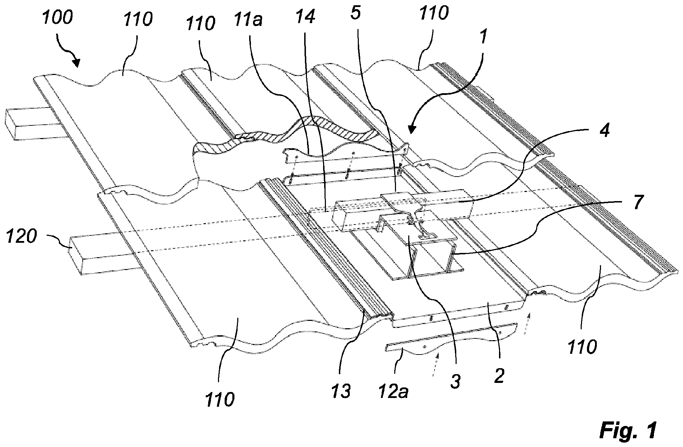

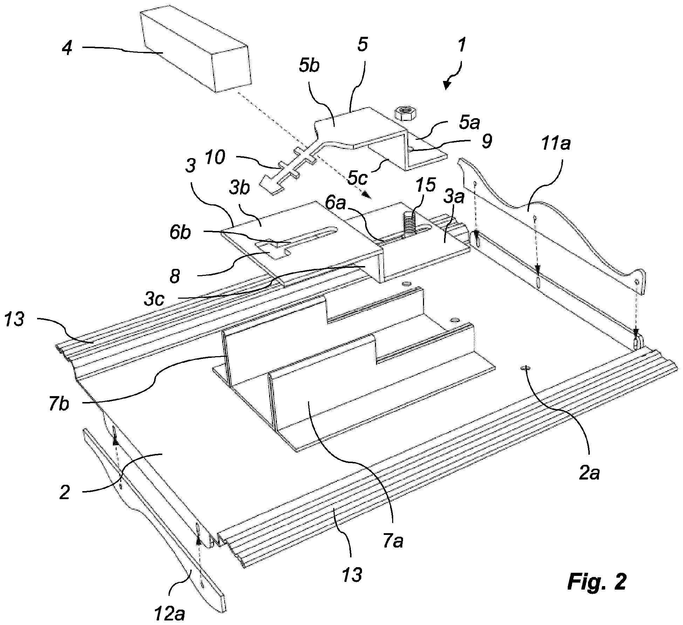

Fig 1. and Fig 2. illustrate a roof attachment console 1 according to one embodiment of the inventive concept from two different perspectives. In Fig. 1, the roof attachment console 1 is shown arranged on a roof 100 with adjacent roof tiles 110. A mounting rail 4 is to be attached onto said attachment console 1. The roof attachment console 1 comprises a bottom plate 2 that is configured to replace a regular roof tile 110 or roof panel on the roof 100. The bottom plate 2 fit together with horizontally adjacent tiles by rabbets 13. A support 14 for a lath 120 on the lower side of the bottom plate 2 is seen transparently in Fig. 1 and directly in Fig. 2. The support 14 for the lath 120 may also be fastened onto a roof truss by fastening means such as screw or bolt through holes 2a in the bottom plate 2 (see fig. 2). An adjustable upper portion 11a and an adjustable lower portion 12a are used for the bottom plate 2 to fit together with adjacent upper and lower tiles 110, respectively.

The roof attachment console 1 further comprises a rail receiving plate 3. In the illustrated embodiment the rail receiving plate 3 is seen arranged onto two supports 7a and 7b, although other configurations of support are possible. The rail receiving plate 3 comprises a first portion 3a, a second portion 3b and a third portion 3c. The first and second portions 3a, 3b extend in respective first and second planes, which planes are in parallel. The two planes are offset each other. The first and second portions 3a, 3b are connected to each other via the third portion 3c extending in a plane substantially perpendicular to the first and second planes. The portions 3a, 3b, 3c of the rail receiving plate 3 is mounted onto the supports 7a, 7b. The two supports 7a, 7b may be integrally formed with the bottom plate 2, welded onto the bottom plate 2, or attached to the bottom plate 2 in another way.

This configuration as illustrated is preferred for the mounting rail 4 being elongated and having an essentially rectangular cross section. Other shapes of the rail receiving plate 3 may be possible or even required for the case of the mounting rail 4 having a different cross section. It is however preferable that the shape of the rail receiving plate 3 at least partly matches the shape of the mounting rail 4.

As seen in Fig. 2, the mutually essentially parallel portions 3a, 3b of the rail receiving plate 3 each comprises a track 6a, 6b. A configuration with only one track is also possible. For instance, only the second portion 3b may be provided with a track 6b, and the first portion 3a may be provided with at least one hole for receiving a fastening means 9. Alternatively, the rail receiving plate 3 may comprise a single track extending from the first portion, via the third portion, to the second portion, and the first and second portions may each be provided with a portion of the track. In the illustrated embodiment, each track 6a, 6b on the first and second portions 3a, 3b extend along a part of the extension of the respective portion 3a, 3b. The two tracks 6a, 6b extend along a common extension line.

As seen in Figs. 1 and 2, the roof attachment console 1 further comprises a fixation member 5. The fixation member 5 is configured to be attached to the rail receiving plate 3 to clamp the mounting rail 4 between the fixation member 5 and the rail receiving plate 3. The fixation member 5 comprises an opening 9 for receiving a fastening means 15 by means of which the fixation member 5 can be attached to the rail receiving plate 3. The fixation member 5 comprises a first portion 5a, a second portion 5b and a third portion 5c. The first and second portions 5a, 5b extend in respective planes being in parallel. The first and second portions 5a, 5b are connected via the third portion 5c extending in a plane substantially perpendicular to the planes of the first and second portions 5a, 5b. The hole 9 is arranged on the first portion 5a. The fastening means 15 is configured to extend through the hole 9 of the first portion 5a of the fixation member 5 and the track (or hole) 6a of the rail receiving plate 3. The first portion 5a of the fixation member 5 can thereby be fixed to the first portion 3a of the rail receiving plate 3.

The fixation member 5 further comprises an engagement member 10 comprising a plurality of pairs of recesses 10 configured to engage with the track 6b on the second portion 3b of the rail receiving plate 3. The engagement member 10 extends from the second portion 5b of the fixation member 5. The engagement member 10 extends inclined relative the extension plane of the second portion 5b of the fixation member 5. The engagement member 10 comprises a central elongated portion, with a plurality of transversely extending pairs of protrusions, thereby forming the pairs of recesses. The pairs of recesses are configured to engage with the track 6b on the second portion 3b of the rail receiving plate 3. When being arranged to the rail receiving plate 3, the fixation member 5 is rotated 90 degrees relative the position as illustrated, such that the engagement member 10 can enter the track 6b. The thickness of the engagement member 10 is less than the width of the track 6b. When the engagement member 10 extends into the track 6b, the fixation member 5 is rotated back 90 degrees such that a pair of recesses on the engagement member 10 engages with the second portion 3a of the rail receiving plate 3 through the track 6b. The plurality of pairs of recesses on the engagement member 10 enables different positions of the fixation member 5, suitable for different sizes of mounting rails 4 to be arranged on the roof attachment console 1.

The illustrated embodiment further comprises an optional feature of a wider end portion 8 of the track 6b on the second portion 3b of the rail receiving plate 3. The end portion 8 is wider than the rest of the track 6b. The end portion 8 thereby enables the engagement member 10 to be inserted into the track 6b without the need of rotation, and then moved to the other part of the track 6b such that a pair of recesses can engage with the track 6b.

The end portion 8 may additionally function as a connection means for a lifeline to be arranged to the roof attachment console for a user to use when working on the roof.

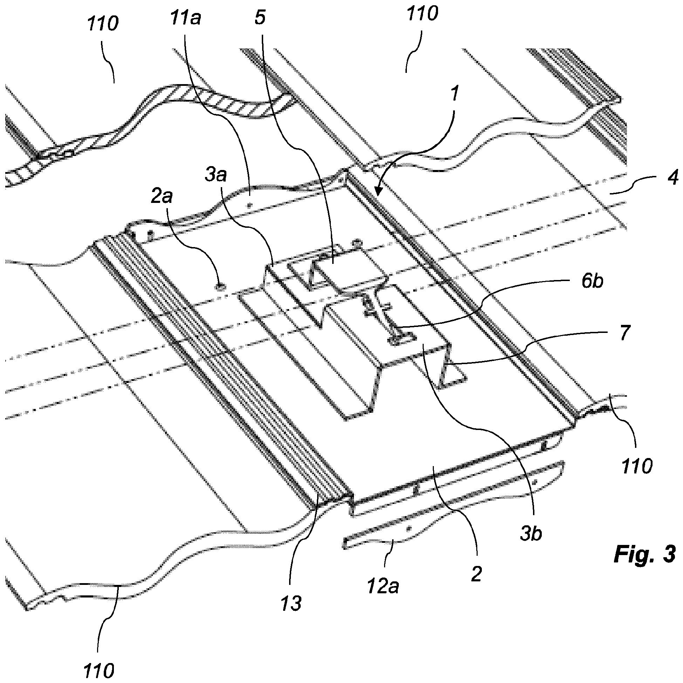

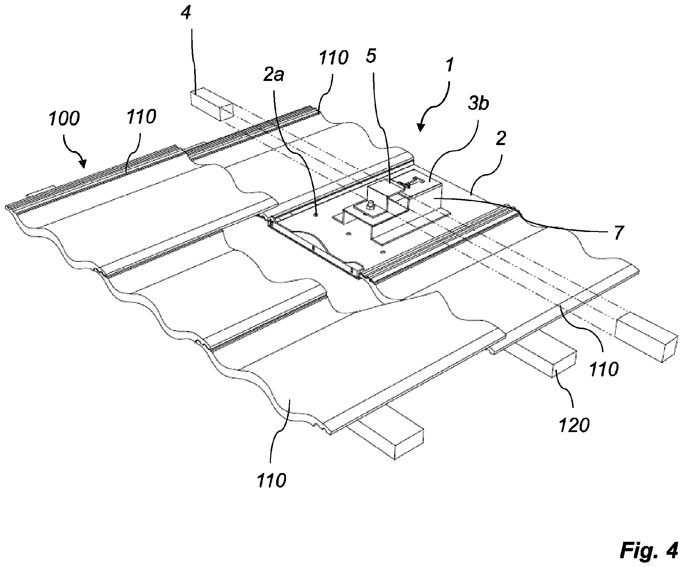

Figs. 3 and 4 illustrate an embodiment of the roof attachment console 1 wherein the rail receiving plate 3 is at least partly integrally formed with the support 7. The rail receiving plate 3 may be seen as one component with the support 7 providing the arrangement to the bottom plate 2. In one embodiment, the second portion 3b of the rail receiving plate 3 is formed as an integral part of the support 7, formed from e.g. a bent sheet. The first portion 3a of the rail receiving plate 3 may instead be attached to the support 7 by e.g. welding. A facilitated manufacturing of the rail receiving plate 3 may thereby be achieved, with further improved strength in the construction. The first and second portions 3a, 3b thereby is formed to extend in offset and parallel planes. Other components of the roof attachment console 1 may be similar as the other illustrated embodiments.

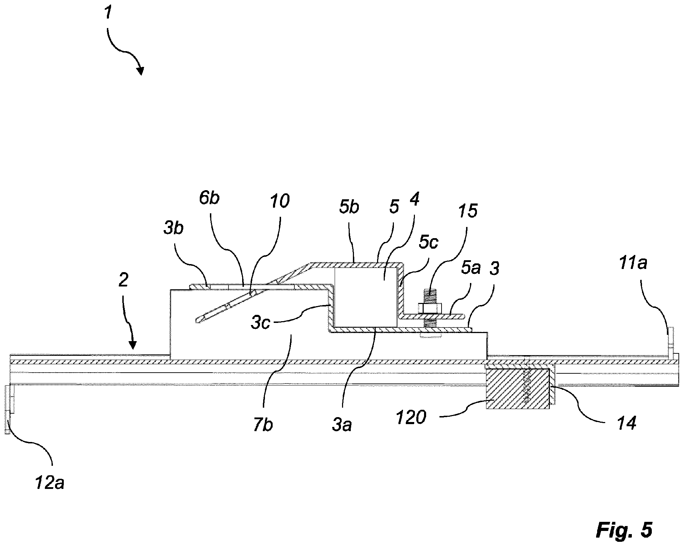

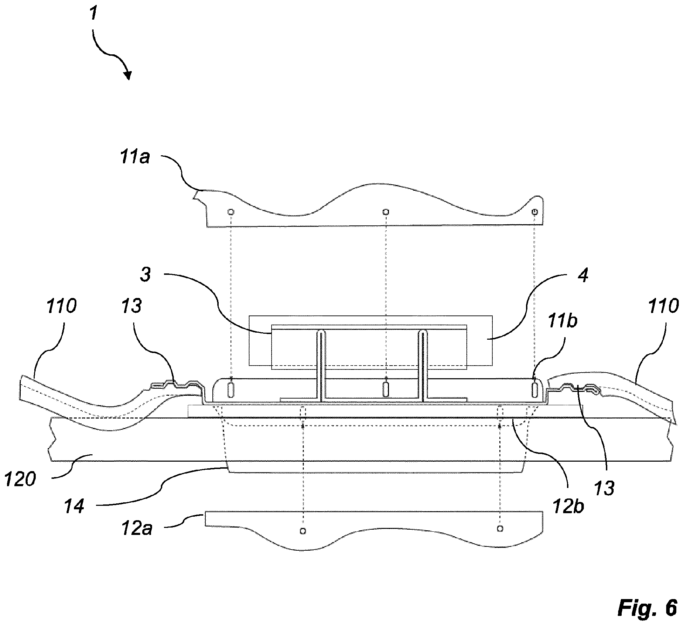

In Figs. 5 and 6 it is further illustrated that the mounting rail 4 is fixed to the rail receiving plate 3 by the fixation member 5 being fixed to the rail receiving plate 3 and how the roof attachment console 1 is arranged to roof tiles 110, according to one embodiment of the inventive concept. Here the fixation member 5 is fastened to one track 6a of the rail receiving plate 3 by fastening means 15. When mounting the mounting rail 4, the mounting rail 4 is preferably first placed on the rail receiving plate 3. For the case of the mounting rail 4 having an essentially rectangular cross section, the rail receiving plate 3 having parallel upper and lower surfaces 3a and 3b and one surface 3c essentially perpendicular to the upper and the lower surface, the mounting rail 4 is preferably placed in contact with two of the surfaces of the rail receiving plate 3, such as the first surface 3a and the third surface 3c. Thereafter, the engagement member 10 with the pairs of recesses is inserted into the track 6b. At least one pair of recesses is directed through the track 6b such that the pair of recesses which is to engage with the track 6b extends through the track 6b. The pairs of recesses engages with the track 6b such that the engagement member 10 cannot be removed from the track 6b by only pulling it away from the rail receiving plate 3. The protrusions of the engagement member 10, formed by the at least one pair of recesses, thereby engages with the track 6b and the second portion 3b of the rail receiving plate 3.

At the other end of the fixation member 5, at the first portion 5a of the fixation member 5, the fastening means 15, in the illustrated embodiment a bolt with nut, is used to attach the first portion 5a of the fixation member 5 to the first portion 3a of the rail receiving plate 3.

In the illustrated embodiment, the engagement member 10 comprises three pairs of recesses. Depending on the size and/or shape of the mounting rail 4, a pair of recesses on the engagement member 10 may be selected to enable the fixation member 5 to reach above the mounting rail 4 to enable the first portion 5a to be attached to the first portion 3a of the rail receiving plate 3.

If the fixation member 5 does not reach over the mounting rail 4, another pair of recesses may be selected to engage with the track 6. The size of the mounting rail 4 may further affect at which point along the track 6a the fastening means 15 is located when extending through the first portion 3a of the rail receiving plate and the opening 9 on the first portion 5a of the fixation member 5. The different sizes of the mounting rail 4 can be different width and/or height of the mounting rail 4. Adjustments regarding which pair of recesses to engage with the track 6b is mainly to adjust for different heights of the mounting rail 4. In the illustrated embodiment the engagement member 10 is arranged to the second track 6b and the fastening means 15 is used to attach the fixation member 5 at the first portion 3a through the first track 6a. In another embodiment, the engagement member 10 be arranged at the first track 6a and the fastening means 15 may be arranged at the second track 6b.

As seen in fig. 5, the support 14 for the lath 120 is L-shaped, being in contact with two sides of the lath 120. The bottom plate 2 is provided with a plurality of holes 2a (seen in figs. 2-4), enabling fastening means, such as screws, to be inserted through the bottom plate 2, the support 14 and into the lath 120. It may be further beneficial to use longer screws such that the screw extends through the lath 120 and further into a truss of the building the roof is arranged on.

The adjustable upper portion 11 a is connected to an upper flange 11b arranged on the bottom plate 2. The upper flange 11b has elongated openings such that the adjustable upper portion 11a can be fastened thereto by fastening means in a vertically adjustable manner. Similarly, adjustable lower portion 12a is connected to a lower flange 12b arranged on the bottom plate 2. The lower flange 12b has elongated openings such that the adjustable lower portion 12a can be fastened thereto by fastening means in a vertically adjustable manner.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A roof attachment console (1) intended to be mounted onto a roof (100), allowing a mounting rail (4) to be attached onto said attachment console, said roof attachment console comprising:
a bottom plate (2) intended to be mounted onto the roof,
a rail receiving plate (3) attached to the bottom plate (2) and
configured to receive a mounting rail (4), said rail receiving plate having at least one track (6a, 6b), and
a fixation member (5) configured to engage with said at least one track (6a, 6b) to be attached to the rail receiving plate to fix a mounting rail (4) to the rail receiving plate (3).

2. The roof attachment console (1) according to claim 1, wherein the fixation member (5) is configured to engage with the rail receiving plate (3) by at least one fastening means.

3. The roof attachment console (1) according to claim 1 or 2, wherein at least one of the fastening means is a screw or a bolt.

4. The roof attachment console (1) according to claim 2 or 3, wherein the fixation member (5) is configured for different engagement with the at least one track (6a, 6b) of the rail receiving plate (3) depending on the size of the mounting rail (4).

5. The roof attachment console (1) according any preceding claims, wherein the fixation member (5) comprises at least one pair of recesses configured to engage with the at least one track (6b) of the rail receiving plate (3).

6. The roof attachment console (1) according to any of the preceding claims, said attachment console being configured to fix the mounting rail (4) to the rail receiving plate (3) through force resulting from the fixation member (5) being attached to the rail receiving plate (3).

7. The roof attachment console (1) according to claim 5, wherein the fixation member (5) comprises at least two pair of recesses, wherein which pair of recesses to engage with the at least one track (6b) of the rail receiving plate (3) depend on the size of the mounting rail (4) to be fixed to the rail receiving plate (3).

8. The roof attachment console (1) according to any of the preceding claims, wherein the rail receiving plate (3) has a first portion (3a) extending in a first plane, a second portion (3b) extending in a second plane in parallel with and offset said first plane, wherein the first and second portions (3a, 3b) are connected via a third portion (3c) extending between said first and second planes.

9. The roof attachment console (1) according to claim 8, wherein the at least one track comprises a first track (6a) arranged on said first portion (3a) and a second track (6b) on said second portion (3b).

10. The roof attachment console (1) according to claim 9, wherein the fixation member (5) engages with the first track (6a) by a fastening means and wherein one of the at least one pairs of recesses engages with the second track (6b).

11. The roof attachment console (1) according to claim 9 or 10, wherein said attachment console is configured to fix the mounting rail (4) to the rail receiving plate (3) through force resulting from the fixation member (5) engaging with the first track (6a) by fastening means and one of the at least one pair of recesses engaging with the second track (6b).

12. The roof attachment console (1) according to any of the preceding claims, wherein the roof attachment console is configured to replace a regular roof tile or roof panel of a roof (100).

13. The roof attachment console (1) according to claim 12, wherein the roof attachment console comprises an adjustable upper portion (11a) configured in shape and size to fit together with an adjacent upper roof tile or roof panel of the roof, and an adjustable lower portion (12a) configured to fit together with an adjacent lower roof tile or roof panel of the roof.

14. The roof attachment console (1) according to claim 12 or 13, wherein the bottom plate (2) has rabbets along its elongation configured to fit together with horizontally adjacent roof tiles or roof panels.

15. The roof attachment console (1) according to any of the preceding claims, wherein the attachment console comprises at least one support (14) for a lath (120) at a bottom side of the bottom plate (2).
